Europäisches Patentamt

European Patent Office

Office européen des brevets

(11) Publication number: **0 252 662 B1**

## EUROPEAN PATENT SPECIFICATION

(45) Date of publication of patent specification: **13.05.92**  (51) Int. Cl.⁵: **G11B 25/04**, G11B 7/24, G06K 19/04

(21) Application number: **87305752.5**

(22) Date of filing: **29.06.87**

(54) Information recording medium.

<table>
<tr><td>(30) Priority: <b>03.07.86 JP 155015/86</b></td><td>(73) Proprietor: <b>CANON KABUSHIKI KAISHA<br>30-2, 3-chome, Shimomaruko, Ohta-ku<br>Tokyo(JP)</b></td></tr>
<tr><td>(43) Date of publication of application:<br><b>13.01.88 Bulletin 88/02</b></td><td></td></tr>
<tr><td>(45) Publication of the grant of the patent:<br><b>13.05.92 Bulletin 92/20</b></td><td>(72) Inventor: <b>Suzuki, Kenichi<br>7-2 Nagatsuta 1-chome Midori-ku<br>Yokohama-shi Kanagawa-ken(JP)</b></td></tr>
<tr><td>(84) Designated Contracting States:<br><b>DE FR GB IT NL</b></td><td></td></tr>
<tr><td></td><td>(74) Representative: <b>Beresford, Keith Denis Lewis<br>et al<br>BERESFORD & Co. 2-5 Warwick Court High<br>Holborn<br>London WC1R 5DJ(GB)</b></td></tr>
<tr><td>(56) References cited:<br><b>DE-A- 2 537 583<br>US-A- 3 795 794</b><br><br><b>IBM TECHNICAL DISCLOSURE BULLETIN, vol.<br>22, no. 8A, January 1980, pages 3150-3151;<br>P.J. HENDERSON: "Document alignment de-<br>vice for transport"</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.19/2.0)

## Description

BACKGROUND OF THE INVENTION

Field of the Invention

The present invention relates to an improvement in a card-like information recording medium used in an information recording/reproducing apparatus for recording/reproducing information upon reciprocal movement of the information recording medium relative to a recording and/or reproducing head.

Related Background Art

Various conventional recording media such as card-, disk- and tape-like recording media are known. Information is recorded in such an information recording medium or reproduced therefrom using light beams. Among these conventional recording media, a card-like optical information recording medium (to be referred to as an optical card hereinafter) is very promising because it can be easily manufactured and carried and has excellent accessibility.

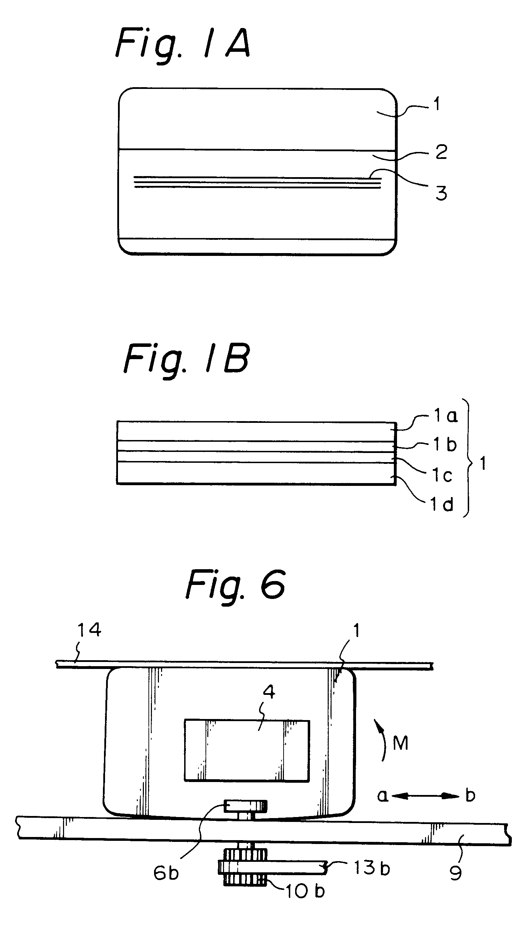

An example of such an optical card proposed by the present applicant is shown in Figs. 1A and 1B. As shown in Fig. 1A, an optical card 1 has a recording area 2 on its surface. A large number of straight information tracks 3 are formed parallel to each other in the recording area 2. The structure of the optical card 1 is shown in Fig. 1B. Reference numeral 1a denotes a light-transmitting flat plate such as an acrylic, vinyl chloride, or PC plate. A recording layer 1b is applied to the flat plate 1a. Reference numeral 1d denotes a flat plate such as an acrylic, vinyl chloride, or PC plate. The flat plate 1d is adhered to the recording layer 1b by an adhesive 1c so as to protect the recording layer 1b.

The optical card has the same size as that of a conventional magnetic card (e.g., a credit card), and information can be recorded thereon. The capacity (one megabyte or more) of the optical card is 10,000 times the capacity of the conventional magnetic card and 100 times or more the capacity of the conventional IC card. Fine rugged pits of 1 μm to several tens of μm are formed with laser beam spots to record information on the surface of the optical card, and thus information can be recorded in the form of digital signals. Therefore, graphic and audio information as well as character information can be recorded. In an information recording/reproducing apparatus using such an optical card as a recording medium, a light beam spot is continuously and relatively moved on the surface of the optical card along the information track, and the information can be recorded or reproduced. Upon completion of movement of the beam spot by a predetermined distance, the beam spot is relatively moved by a predetermined distance in a direction perpendicular to the extension direction of information tracks. During this movement, information is neither recorded nor reproduced. When the beam spot is continuously and relatively moved again in the direction of information tracks, information can be recorded or reproduced again. Alternate movement of the beam spot in the direction of information tracks and in the direction perpendicular thereto is repeated a desired number of times.

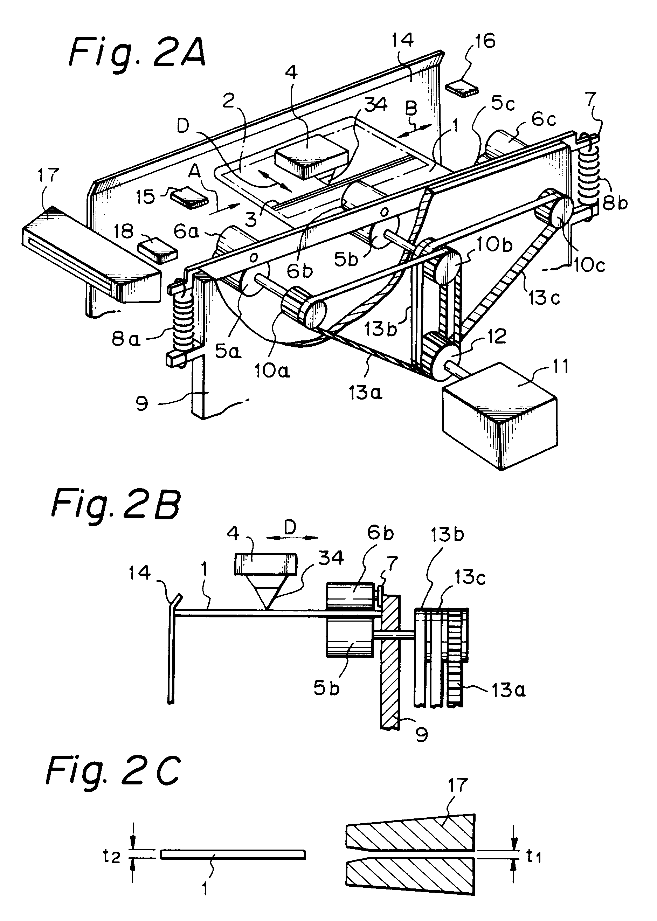

A conventional information recording/reproducing apparatus operated as described above and described in U.S.P. Serial No. 918,908 filed by the present applicant is shown in Figs. 2A, 2B, and 2C. Fig. 2A is a perspective view showing the structure of a card feed mechanism in the information recording/reproducing apparatus using an optical card as an information recording medium, Fig. 2B is a schematic sectional view of the card feed mechanism when viewed in a direction indicated by arrow A, and Fig. 2C is a schematic sectional view of a card insertion portion thereof. Reference numeral 4 denotes an optical head arranged to record or reproduce information. The optical card 1 is reciprocally moved while being clamped between driving rollers 5a, 5b, and 5c and press rollers 6a, 6b, and 6c. For illustrative convenience, the pair of the driving roller 5a and the press roller 6a are defined as a roller pair a. Similarly, the pairs of rollers 5b and 6b and rollers 5c and 6c constitute roller pairs b and c, respectively.

The press rollers 6a, 6b, and 6c are rotatably coupled to a connecting plate 7. The both ends of the connecting plate 7 are connected to a frame 9 through springs 8a and 8b as biasing means. Therefore, the press rollers 6a, 6b, and 6c are biased by the springs 8a and 8b and respectively abut against the driving rollers 5a, 5b, and 5c.

The rotating shafts of the driving rollers 5a, 5b, and 5c extend through the frame 9. Pelleys 10a, 10b, and 10c are fixed on the rotating shafts, respectively.

A rotational force of motor 11 is transmitted to the pulleys 10a, 10b, and 10c respectively through timing belts 13a, 13b, and 13c, thereby rotating the driving rollers 5a, 5b, and 5c.

The free side of the optical card 1 reciprocated while being clamped by the roller pairs, a, b, and c is biased by a leaf spring 14 so that the clamped side abuts against the frame 9. Therefore, the optical card 1 receives the driving force upon rotation of the roller pairs a, b and c, is guided to the frame 9, and is reciprocated therein.

As shown in Fig. 2B, an optical head 4 is moved in a direction indicated by arrow D at a position where the optical card 1 is clamped by the roller pair b. The recording area 2 is thus irradiated with a light beam 34.

In order to reciprocate the optical card 1, the motor 11 is rotated in the reverse direction. In order to synchronize the reverse rotation timing, position sensors 15 and 16 are arranged at both ends of the movable range of the optical card 1. A detection sensor 18 is arranged near the card insertion port 17 to detect that the optical card has been inserted from the card insertion port 17.

As shown in Fig. 2C, a gap t1 of the card insertion port 17 and a thickness t2 of the optical card satisfy relation t2 < t1. Therefore, a card having a thickness larger than the predetermined thickness cannot be inserted into the card insertion port 17.

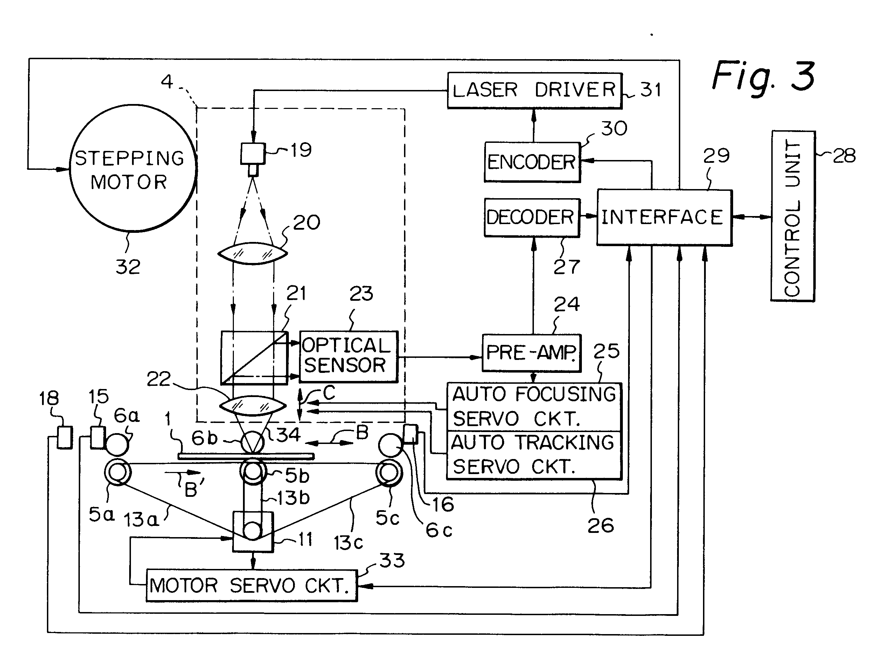

Fig. 3 is a block diagram of the information recording/reproducing apparatus.

Referring to Fig. 3, the optical head 4 comprises a laser 19, a collimator lens 20, a beam splitter 21, an objective lens 22, and an optical sensor 23. An output from the optical sensor 23 is input to a preamplifier 24. Auto focusing (to be referred to as an AF hereinafter) and auto tracking (to be referred to as an AT hereinafter) are respectively performed by an AF servo circuit 25 and an AT servo circuit 26 by utilizing the output from the preamplifier 24. More specifically, the objective lens 22 is moved in a direction of arrow C by the AF servo circuit 25 to focus a light beam 34. The objective lens 22 is slightly moved in a direction of arrow D by the AT servo circuit 26 to cause the light beam 34 to trace a desired information track 3.

The output from the preamplifier 24 is decoded by a decoder 27 and is externally output through an interface 29 on the basis of an instruction from a control unit 28.

In order to record information, information is modulated by an encoder 30 to drive a laser driver 31. A modulated laser beam having a high power is output from the laser 19 to form a pit train in the recording area 2 of the optical card 1. The optical head 4 itself is driven by a stepping motor 32 in the direction indicated by arrow D. In addition, the operation of a motor 11 for reciprocating the optical card is controlled by a motor servo circuit 33 on the basis of outputs from the position sensors 15 and 16 and the detection sensor 18.

When the optical card feed mechanism having the arrangement described above feeds the optical card 1 in a direction indicated by arrow b, a frictional force F1 is generated between the contact surfaces of the optical card 1 and the leaf spring 14. The frictional force F1 and a thrust T generated upon rotation of the press roller 6b produce a moment in a direction indicated by arrow M, and the spring 14 is urged in the direction indicated by arrow M. At this time, a gap is slightly formed between the frame 9 and a distal end 1b of the optical card 1 on the side facing the frame 9. A frictional force F2 generated between the optical card 1 and the frame 9 is concentrated on a rear end portion la of the optical card 1 on the side facing the frame 9. At the same time, when the contact conditions of the optical card 1 and the leaf spring 14 are changed, the frictional force F1 is reduced to cause the optical card 1 to laterally vibrate in the opposite direction according to an action opposite to that described above. In this manner, the optical card 1 swings while being driven.

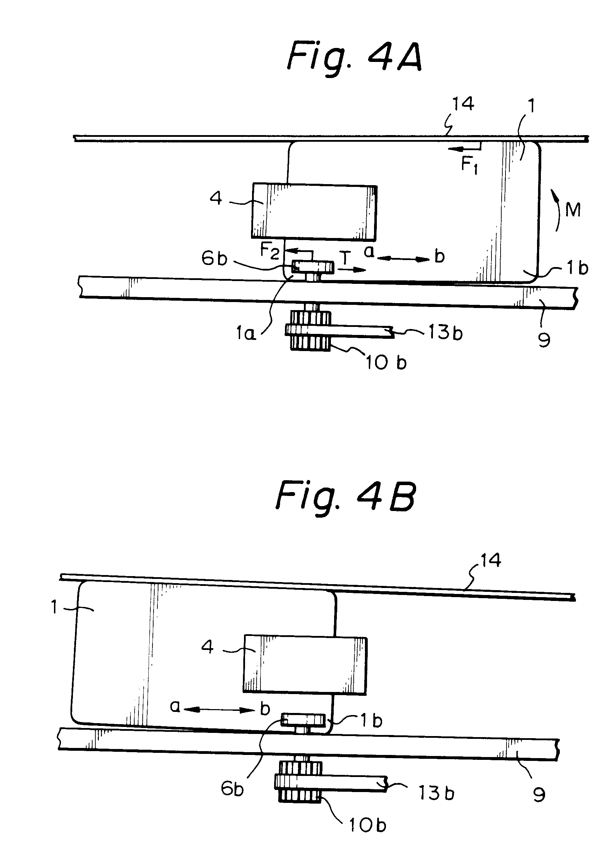

As shown in Fig. 4B, when the moving direction of the optical card 1 is reversed and the card 1 is thus fed in a direction indicated by arrow a, the frictional force F1 acts on the card 1 in the opposite direction. In this case, the distal end 1b of the optical card 1 is brought into contact with the frame 9. When the optical card 1 is moved in the direction indicated by arrow a, the distal end portion of the optical card 1 swings in the direction of arrow a.

Under these conditions, when information is to be recorded on the surface of the optical card 1 or reproduced therefrom, auto focusing control, auto tracking control, and optical card feed speed constant control are subjected to disturbance. It is thus difficult to perform appropriate control in the presence of such a disturbance.

In particular, when a disturbance occurs in the tracking control mode, information tracks that are supposed to be linear in the recording mode run in a zig-zag manner. In the reproduction mode, the light beam emitted from the optical head 4 is subjected to disturbance and appropriate scanning with the beam spot cannot be performed. As a result, many read errors occur.

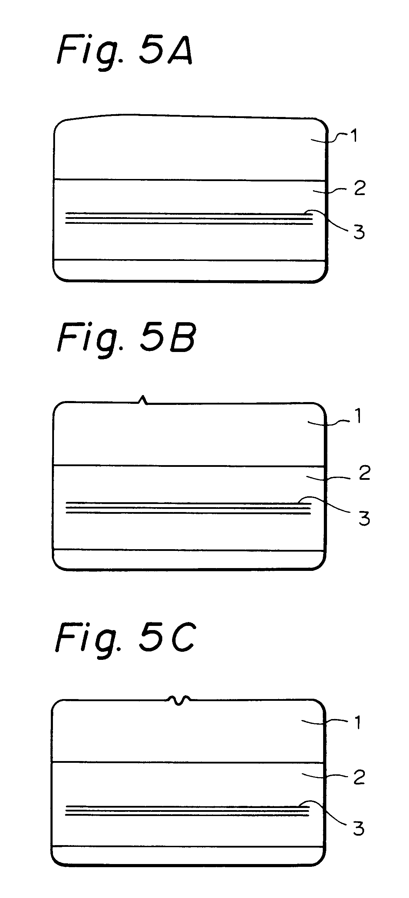

The conventional optical card shown in Figs. 1A and 1B often has dimensional defects shown in Figs. 5A and 5B during the card fabrication process. For example, as shown in Fig. 5A, the side of the optical card is partially inclined. As shown in Fig. 5B, a bur is left on the side of the optical card 1 during cutting of the optical card 1. As shown in Fig. 5C, a notch is formed on part of the side of the optical card 1.

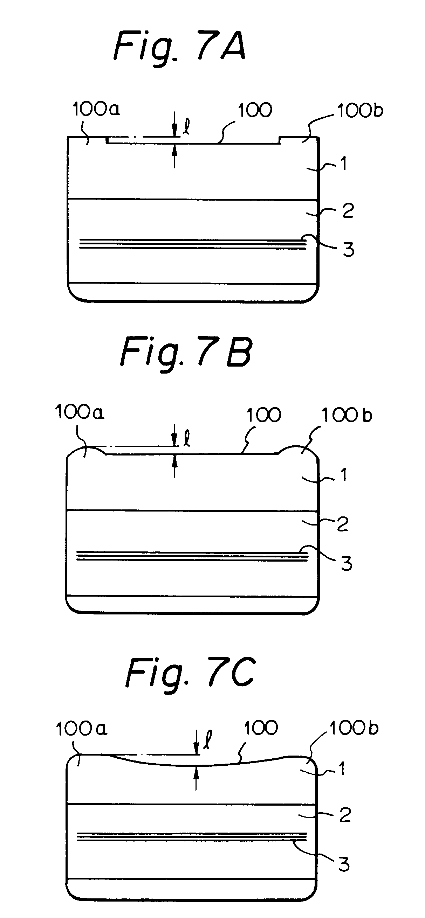

Lateral vibration and swinging of the optical card 1 upon feeding thereof by means of the feed mechanism typically occur if an optical card has the abovementioned defects. For example, Fig. 6 shows a case wherein an optical card having an inclined side is used in a conventional information recording apparatus (Fig. 2).

As is apparent from Fig. 6, the dimensional defect leads to the same effect as in the case wherein only the central portion of the side of the optical card 1 projects and is in contact with the guide surface of the frame 9. Therefore, such an optical card is easily subjected to lateral vibration or swinging by the above-mentioned moments. This is also true for local dimensional defects shown in Figs. 5B and 5C. A posterior dimensional defect shown in Fig. 5C naturally causes a problem during use. Therefore, a strong demand has arisen for eliminating defects including the above defects.

In the conventional optical card shown in Fig. 1, the adhesive often protrudes from the end face of the card and attached thereto during the fabrication process. In addition, even if the adhesive does not protrude during the fabrication process, the adhesive may protrude from the card end face due to heat generated by the sliding portions when the card is reciprocated in the apparatus shown in Fig. 2. Furthermore, the adhesive often protrudes from the card end face when it is stored at a high temperature. In these cases, a frictional resistance is increased to overload the motor. The moving speed of the card cannot be maintained constant due to frictional resistance variations. Thus, accurate information recording and reproduction cannot be performed.

U.S patent specification 3,795,794 discloses a magnetic card which is of lamina construction, the card being characterised in that it has along one longitudinal edge of it a longitudinal notch. This notch has rectangular ends which result in sharp corners between the curved ends of the card and the notch. The purpose of the notch is to minimise the risk of wedging or jamming as the card is inserted into a magnetic card reader. However, this known construction of card still has the disadvantage that it suffers from the relatively high frictional resistance referred to earlier.

## SUMMARY OF THE INVENTION

According to the present invention, a card-like information recording medium of the kind having at least one of its sides non-linear in shape is characterised in that there are at least two projections of entirely smooth arcuate shape extending in the same plane as a surface of said card-like information recording medium on one or both sides thereof along the direction in which said card-like information recording medium moves when in use.

According to the present invention, a card-like information recording medium of the kind having a projection extending on the same plane as a surface of said card-like information recording medium is characterised in that there are at least two said projections of entirely smooth arcuate shape on both sides thereof along the direction in which said card-like information recording medium moves when in use.

According to the present invention, a card-like information recording medium of the kind having a projection extending on the same plane as a surface of said card-like information recording medium is characterised in that there are at least two projections of entirely smooth arcuate shape on at least one side thereof along a longitudinal direction of said recording medium.

According to the present invention, a card-like information recording medium of the kind having a projection extending on the same plane as a surface of said card-like information recording medium is characterised in that there are at least two projections of entirely smooth arcuate shape on both sides thereof along a longitudinal direction of said recording medium.

## BRIEF DESCRIPTION OF THE DRAWINGS

Figs. 1A and 1B and Figs. 5A, 5B, and 5C are schematic views of a conventional information recording medium;

Fig. 2A is a perspective view showing an arrangement of a card feed mechanism in an information recording/reproducing apparatus;

Fig. 2B is a schematic sectional view of the mechanism of Fig. 2A taken in a direction indicated by arrow A;

Fig. 2C is a sectional view of a card insertion portion of the mechanism shown in Fig. 2A;

Fig. 3 is a block diagram of the information recording/reproducing apparatus;

Figs. 4A and 4B arc schematic plan views showing the case wherein the conventional information recording medium is applied to the information recording/reproducing apparatus;

Figs. 5A to 5C illustrate various defects which occur in known optical cards;

Fig. 6 is a schematic plan view showing a case wherein an information recording medium having a dimensional defect is applied to the information recording/ reproducing apparatus;

Figs. 7A, 7B, 7C, and 7D and Figs. 8A and 8B are plan views of information recording media according to embodiments of the present invention;

Fig. 9 is a schematic view showing an arrangement of a feed mechanism for the information recording/ reproducing apparatus;

Figs. 10A and 10B are schematic plan views showing a case wherein the information recording medium of the present invention is applied to the information recording/ reproducing apparatus; and

Figs. 11A and 11B, Figs. 12A and 12B, and Figs. 13A and 13B are-schematic views of information recording media according to other embodiments of the present invention.

## DESCRIPTION OF THE PREFERRED EMBODIMENTS

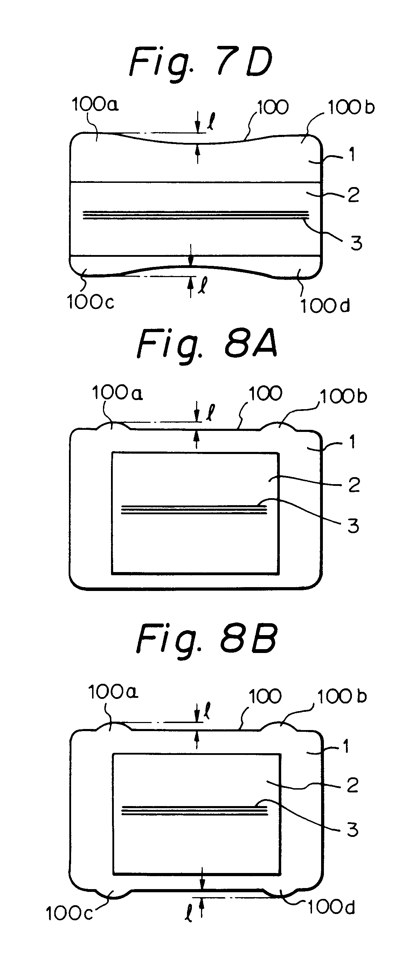

Figs. 7A, 7B, 7C, and 7D are plan views showing optical cards as information recording media according to emtodiments of the present invention. The same reference numerals as in Figs. 1A and 1B denote the same parts in Figs. 7A to 7D.

As shown in Figs. 7A to 7D, each optical card 1 has a recording area 2 on its surface and a large number of parallel information tracks 3 in the recording area in the same manner as in the conventional optical card shown in Figs. 1A and 1B.

An optical card 1 shown in Fig. 7A has projections 100a and 100b of a side 100 of the optical card 1 on the same plane as the surface of the card 1. The projections 100a and 100b may be formed on at least any one side of the optical card 1. Projections must be formed at end portions of one or two sides parallel to the information tracks 3. The projections 100a and 100b preferably have smooth arcuated surfaces so as to allow the spring 14 and the frame 9 to smoothly guide the optical card 1 since the projections 100a and 100b are brought into sliding contact with the leaf spring 14 or the frame 9 (Fig. 4). The projections 100a and 100b may have a smoother arcuated surface (Fig. 7C) than the projections 100a and 100b shown in Fig. 7B according to the same reason as described above.

For illustrative convenience, the projections 100a and 100b considerably project from the side 100 of the optical card 1. However, in practice, the height $l$ of the projection falls within the range of 0.1 to 1.0 mm and preferably 0.2 to 0.3 mm. When the height of the projections falls within the above range, portability of the optical card 1 is not degraded.

Projections 100a, 100b, 100c, and 100d may be formed on both sides parallel to the information tracks 3. The following effect can be obtained regardless of the position of the side urged against the frame 9.

The positions of the projections are preferably positions inside by $(1/4)m$ (where m = the length in the card feed direction) from both ends of the side 100 of the optical card 1. In particular, if the projections are formed on both end portions of the side 100 of the card 1, the card can be stably and straightly fed from the beginning to the end.

In the above embodiment, the projections are formed near both ends of one side of the optical card 1. However, if an information recording area of the optical card 1 is short, as shown in Fig. 8, the projections may be formed at side portions near the both ends of the information recording area. It should be noted that the projections are preferably formed symmetrical about the center of the optical card 1.

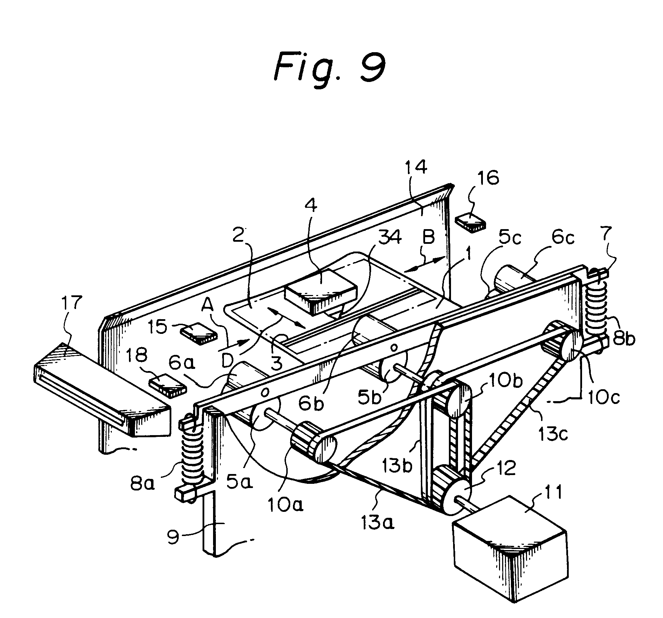

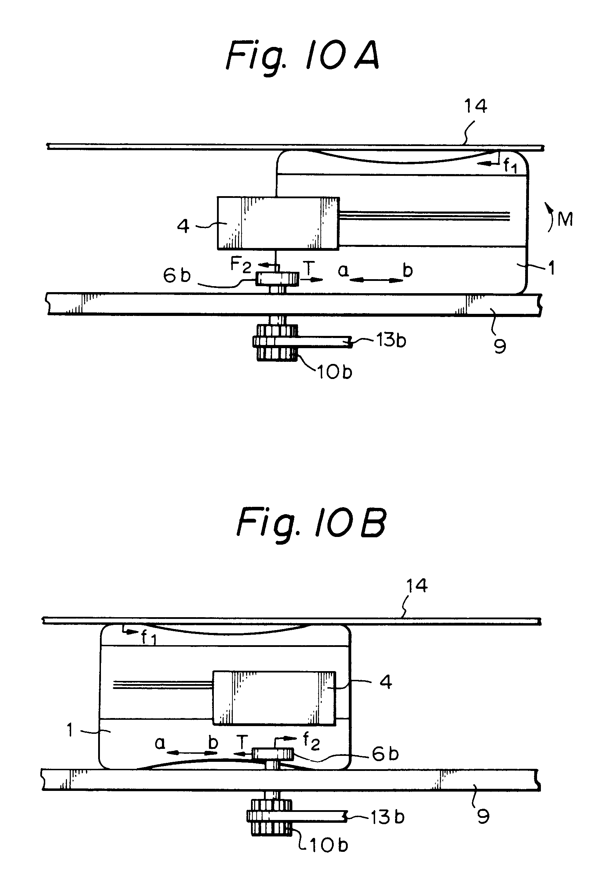

The operation of the optical card 1 having the above structure will be described above. Assume that the optical card 1 is used in an information recording/reproducing apparatus (Fig. 9) having the same arrangement as that of the information recording/reproducing apparatus shown in Fig. 2. As shown in Fig. 10A, when the optical card is fed in a direction indicated by arrow b, a frictional force f1 is generated by the contact surfaces of the optical card 1 and the leaf spring 14. However, the contact portion of the optical card 1 is so smooth that the frictional force f1 is much smaller than the conventional frictional force F1. Therefore, the moment in a direction indicated by arrow M as a combination of the frictional force f1 and a thrust T obtained upon rotation of the press roller 6b is much smaller than the conventional one. The moment in Fig. 10A can be as small as negligible substantially, and no gap is formed between the optical card 1 and the frame 9. A frictional force F2 generated between the optical card 1 and the frame 9 is distributed along the entire optical card 1 side facing the frame 9. Therefore, the optical card 1 is free from swinging while being driven.

As shown in Fig. 10B, when the projections are formed on both sides of the optical card 1 along the feed direction, a frictional force f2 generated between the optical card 1 and the frame 9 can be much smaller than the conventional frictional force F2, thereby assuring stabler linear driving.

The operation of the optical card 1 will be described in more detail. When the optical card 1 is applied to the information recording/reproducing apparatus shown in Fig. 9, the projections 100a and 100b formed on the both end portions of the sides of the optical cards 1 can effectively function even if the card has the dimensional defect shown in Fig. 5A, 5B, or 5C.

In particular, even if the local defect shown in Fig. 5B or 5C is formed between the projections 100a and 100b, the projections 100a and 100b are brought into slidable contact with the frame 9 and the leaf spring 14. Therefore, such a local defect does not adversely affect linear driving of the optical card 1.

As described above, at least two projections extending on the same plane as the surface of the medium are formed at the both end portions of at least one side along the moving direction of the medium in the above emtodiment. With the above structure, burs and recesses which adversely affect linear driving of the information recording medium can be neglected. Therefore, the information pit train formed on the information recording medium has excellent linearity. Appropriate information reproduction, tracking control, or recording medium feed speed control can be performed for such an information pit train.

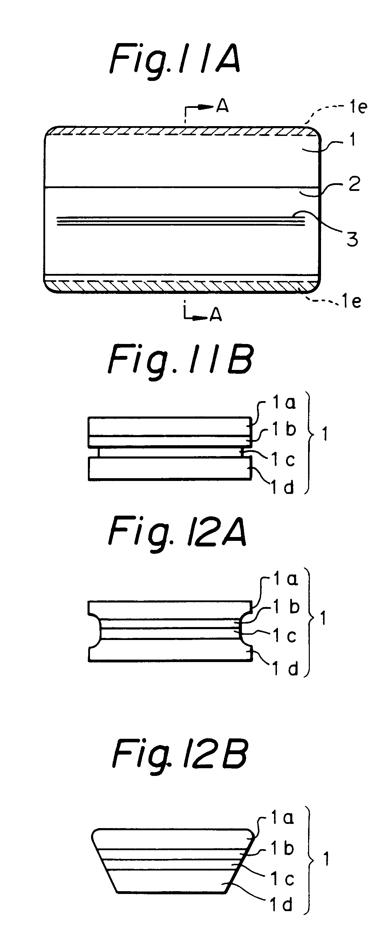

Fig. 11A is a plan view of an information recording medium according to another emtodiment of the present invention, and Fig. 11B is a sectional view thereof taken along the line A-A of Fig. 11A. In this emtodiment, the information recording medium comprises an optical card. The same reference numerals as in the prior art denote the same parts in Figs. 11A and 11B.

As shown in Fig. 11A, an optical card 1 has a recording area 2 thereon and a large number of parallel information tracks 3 in the information recording area 2. As shown in Fig. 11B, a light-transmitting flat plate 1a is an acrylic, vinyl chloride, or PC plate. A recording layer 1b is formed on the flat plate 1a. A flat plate 1d is an acrylic, vinyl chloride, or PC plate. The flat plate 1d is adhered to the recording layer 1b by an adhesive 1c to protect the recording layer 1b.

In the optical card 1, an adhesive noncoated portion 1e is formed near the card sliding side, as shown in Fig. 11. For this reason, when the card 1 is used, the adhesive 1c is not brought into contact with the leaf spring 14 or the frame 9 (Fig. 4). The card moving speed can be maintained constant. The width of the noncoated portion 1e is 0.5 to 1.0 mm in practice.

As shown in Fig. 12, if a bonding portion using an adhesive is recessed from the other portion and even if the adhesive is slightly protruded in the fabrication process, the protruded adhesive portion will not be brought into contact with the sliding surface.

The depth of the recess falls within the range of 0.1 to 1.0 mm in practice. In order to prevent protrusion of the adhesive during the fabrication process, it is effective to remove the protruded adhesive after adhesion.

In addition, the shape of the projection is preferably as smooth as possible so as to allow smooth movement of the card.

According to this embodiment as described above, the bonding portion formed by at least an adhesive during a medium fabrication process has the same plane as the surface of the medium at the end face of at least one side along the moving direction of the information recording medium is recessed from the most projected portion of the end face. The influence of the adhesive protruding from the side of the medium, which interferes with movement of the information recording medium, can be prevented. Therefore, the feed speed of the information recording medium can be maintained constant. Accurate information recording or reproduction can be performed.

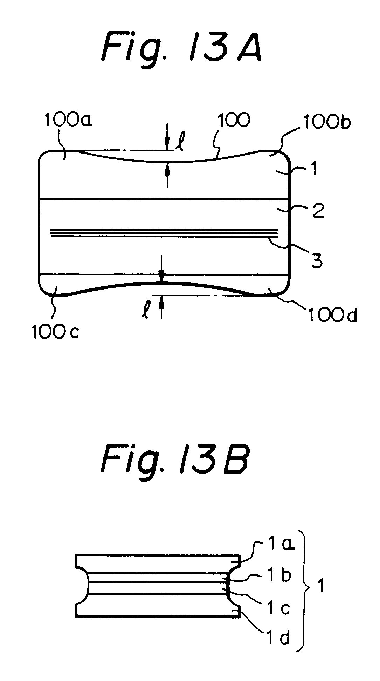

In addition, if the above two emtodiments are comtined, as shown in Fig. 13, a better effect can be obtained.

The present applicant made a test and found that the above-mentioned arrangement had to be taken for an optical card having a track width of 100 $\mu$m or less, of cards used in a conventional optical card recording/reproducing apparatus (e.g., the optical card was reciprocated at a speed of 30 mm/s or more and information was recorded at a pit size of 10 $\mu$m or less). In particular, the above conditions are indispensable for an optical card having a track width of 50 $\mu$m or less.

Thus, in accordance with one aspect of the invention, there is provided a data record card having linearly arranged data tracks, wherein an edge of the card which runs in the direction of the data tracks has at least two spaced projections. In accordance with another aspect of the invention, the card has two layers sandwiching an adhesive layer, wherein the adhesive layer stops short of the most lateral part of the edge.

## Claims

1. A card-like information recording medium of the kind having at least one of its sides non-linear in shape characterised in that there are at least two projections (100a, 100b) of entirely smooth arcuate shape extending in the same plane as a surface of said card-like information recording medium (1) on one or both sides thereof along the direction in which said card-like information recording medium moves when in use.

2. A card-like information recording medium (1) of the kind having a projection extending on the same plane as a surface of said card-like information recording medium characterised in that there are at least two said projections (100a, 100b, 100c, 100d) of entirely smooth arcuate shape on both sides thereof along the direction in which said card-like information recording medium (1) moves when in use.

3. A card-like information recording medium (1) of the kind having a projection extending on the same plane as a surface of said card-like information recording medium characterised in that there are at least two projections (100a, 100b) of entirely smooth arcuate shape on at least one side thereof along a longitudinal direction of said recording medium (1).

4. A card-like information recording medium of the kind having a projection extending on the same plane as a surface of said card-like information recording medium characterised in that there are at least two projections (100a, 100b, 100c, 100d) of entirely smooth arcuate shape on both sides thereof along a longitudinal direction of said recording medium (1).

5. A card-like information recording medium as claimed in any one of claims 1 to 4 in which the projections (100a, 100b, 100c, 100d) have a projection height of 0.1 to 1.0 mm.

6. A card-like information recording medium as claimed in any previous claim in which the projections (100a, 100b, 100c, 100d) are formed near both end portions of an information recording area (2) of said card-like information recording medium (1).

7. A card-like information recording medium as claimed in any previous claim in which said projections (100a, 100b, 100c, 100d) are formed symmetrically about the centre of said card-like information recording medium (1).

8. A card-like information recording medium as claimed in any previous claim in which the projections have a configuration of entirely smooth arcuate shape.

9. A card-like information recording medium of the kind having at least two sheet-like members adhered by an adhesive characterised in that there is a portion (1e) non-coated with said adhesive provided at the vicinity of at least one side of said recording medium along a longitudinal direction of said recording medium.

10. A card-like information recording medium of the kind comprising at least two sheet-like members adhered by an adhesive so as to constitute a bonding portion characterised in that said bonding portion (1c) is recessed from a most projected portion of an end face (1a, 1d) of at least one side of said recording medium along a longitudinal direction of said recording medium.

11. A card-like information recording medium of the kind including at least two-sheet like members adhered by an adhesive so as to constitute a bonding portion characterised in that at least said bonding portion (1c) is recessed from a most projected portion of an end face (1a, 1d) of at least one side thereof along the direction in which said card-like information recording medium moves when in use.

12. A card-like information recording medium of the kind having at least two sheet-like members adhered by an adhesive characterised in that there is an adhesive non-coated portion (1e) formed near at least one side and along a moving direction of said card-like information recording medium.

13. A card-like information recording medium as claimed in any previous claim and formed by at least two sheet-like members (1b, 1d) adhered by an adhesive (1c) so as to constitute a bonding portion, at least said bonding portion (1c) being recessed from a most projected portion of an end face of said side within the same plane as the surface of said card-like information recording medium (1).

14. A card-like information recording medium as claimed in any of claims 9 to 13 in which only the bonding portion (1c) is recessed.

15. A card-like information recording medium as claimed in any of claims 9 to 14 in which the recessed portion of the bonding portion (1c) has a depth of 0.1 to 1.0 mm.

16. A card-like information recording medium as claimed in any of claims 9 to 15 in which a portion (1b, Fig. 12A) near said bonding portion (1c) is recessed.

17. A card-like information recording medium as claimed in any of claims 9 to 16 in which the most projected portion has a smooth arcuate shape.

18. A card-like information recording medium as claimed in any of claims 9 to 16 in which the most projected portion comprises part of a square.

19. A card-like information recording medium as claimed in either claim 9 or 10 in which the adhesive non-coated portion has a width falling within a range of 0.5 to 1.0 mm.

20. A card-like information recording medium as claimed in any previous claim which comprises an optical card.

21. A card-like information recording medium as claimed in any previous claim which is open-fed.

22. A card-like information recording medium as claimed in any previous claim which has the size of a credit card.

23. A card-like information recording medium as claimed in any previous claim in which there are tracks formed parallel to the moving direction, when in use.

**Revendications**

1. Support d'enregistrement d'informations analogue à une carte, du type dont au moins l'un des côtés est d'une forme non linéaire, caractérisé en ce qu'il y a au moins deux saillies (100a, 100b) de forme entièrement à courbure douce s'étendant dans le même plan qu'une surface dudit support (1) d'enregistrement d'informations analogue à une carte sur l'un de ses côtés et sur ses deux côtés dans la direction dans laquelle ledit support d'enregistrement d'information analogue à une carte se déplace lors de l'utilisation.

2. Support (1) d'enregistrement d'informations analogue à une carte du type comportant une saillie s'étendant sur le même plan qu'une surface dudit support d'enregistrement d'informations analogue à une carte, caractérisé en ce qu'il y a au moins deux desdites saillies (100a, 100b, 100c, 100d) de forme entièrement en courbure douce sur ses deux côtés dans la direction dans laquelle ledit support (1) d'enregistrement d'informations analogue à une carte se déplace lors de l'utilisation.

3. Support (1) d'enregistrement d'informations analogue à une carte du type comportant une saillie s'étendant sur le même plan qu'une surface dudit support d'enregistrement d'informations analogue à une carte, caractérisé en ce qu'il y a au moins deux saillies (100a, 100b) de forme entièrement à courbure douce sur au moins l'un de ses côtés dans une direction longitudinale dudit support (1) d'enregistrement.

4. Support d'enregistrement d'informations analogue à une carte du type comportant une saillie s'étendant sur le même plan qu'une surface dudit support d'enregistrement d'informations analogue à une carte, caractérisé en ce qu'il y a au moins deux saillies (100a, 100b, 100c, 100d) de forme entièrement à courbure douce sur ses deux côtés dans une direction longitudinale dudit support (1) d'enregistrement.

5. Support d'enregistrement d'informations analogue à une carte selon l'une quelconque des revendications 1 à 4, dans lequel les saillies (100a, 100b, 100c, 100d) ont une hauteur en saillie de 0,1 à 1,0 mm.

6. Support d'enregistrement d'informations analogue à une carte selon l'une quelconque des revendications précédentes, dans lequel les saillies (100a, 100b, 100c, 100d) sont formées à proximité de deux parties extrêmes d'une zone (2) d'enregistrement d'informations dudit support (1) d'enregistrement d'informations analogue à une carte.

7. Support d'enregistrement d'informations analogue à une carte selon l'une quelconque des revendications précédentes, dans lequel lesdites saillies (100a, 100b, 100c, 100d) sont formées symétriquement par rapport au centre dudit support (1) d'enregistrement d'informations analogue à une carte.

8. Support d'enregistrement d'informations analogue à une carte selon l'une quelconque des revendications précédentes, dans lequel les saillies ont une configuration de forme entièrement à courbure douce.

9. Support d'enregistrement d'informations analogue à une carte du type ayant au moins deux éléments analogues à une feuille collés par un adhésif, caractérisé en ce qu'il y a une partie (1e) non revêtue dudit adhésif, siutée au voisinage d'au moins un côté dudit support d'enregistrement dans une direction longitudinale dudit support d'enregistrement.

10. Support d'enregistrement d'informations analogue à une carte du type comportant au moins deux éléments analogues à une feuille collés par un adhésif de façon à constituer une partie de liaison, caractérisé en ce que ladite partie (1c) de liaison est en retrait d'une partie plus en saillie d'une face extrême (1a, 1d) d'au moins un côté dudit support d'enregistrement dans une direction longitudinale dudit support d'enregistrement.

11. Support d'enregistrement d'informations analogue à une carte du type comprenant au moins deux éléments analogues à une feuille collés par un adhésif afin de constituer une partie de liaison, caractérisé en ce qu'au moins ladite partie de liaison (1c) est en retrait d'une partie plus en saillie d'une face extrême (1a, 1d) d'au moins l'un de ses côtés dans la direction dans laquelle ledit support d'enregistrement d'informations analogue à une carte se déplace lors de l'utilisation.

12. Support d'enregistrement d'informations analogue à une carte du type ayant au moins deux éléments analogues à une feuille collés par un adhésif, caractérisé en ce qu'il y a une partie (1e) non revêtue d'adhésif formée à proximité d'au moins un côté et dans une direction de déplacement dudit support d'enregistrement d'informations analogue à une carte.

13. Support d'enregistrement d'informations analogue à une carte selon l'une quelconque des revendications précédentes et formé par au moins deux éléments (1b, 1d) analogues à des feuilles, collés par un adhésif (1c) de façon à constituer une partie de liaison, au moins ladite partie de liaison (1c) étant en retrait d'une partie plus en saillie d'une face extrême dudit côté dans le même plan que la surface dudit support (1) d'enregistrement d'informations analogue à une carte.

14. Support d'enregistrement d'informations analogue à une carte selon l'une quelconque des revendications 9 à 13, dans lequel seule la partie de liaison (1c) est en retrait.

15. Support d'enregistrement d'informations analogue à une carte selon l'une quelconque des revendications 9 à 14, dans lequel la partie en retrait de la partie de liaison (1c) a une profondeur de 0,1 à 1,0 mm.

16. Support d'enregistrement d'informations analogue à une carte selon l'une quelconque des revendications 9 à 15, dans lequel une partie (1b, Figure 12A) proche de ladite partie de liaison (1c) est en retrait.

17. Support d'enregistrement d'informations analogue à une carte selon l'une quelconque des revendications 9 à 16, dans lequel la partie plus en saillie présente une forme à courbure douce.

18. Support d'enregistrement d'informations analogue à une carte selon l'une quelconque des revendications 9 à 16, dans lequel la partie plus en saillie constitue une portion d'un carré.

19. Support d'enregistrement d'informations analogue à une carte selon la revendication 9 ou 10, dans lequel la partie non revêtue d'adhésif a une largeur comprise dans une plage de 0,5 à 1,0 mm.

20. Support d'enregistrement d'informations analogue à une carte selon l'une quelconque des revendications précédentes, qui comprend une carte optique.

21. Support d'enregistrement d'informations analogue à une carte selon l'une quelconque des revendications précédentes, qui est à alimentation libre.

22. Support d'enregistrement d'informations analogue à une carte selon l'une quelconque des revendications précédentes, qui a la dimension d'une carte de crédit.

23. Support d'enregistrement d'informations analogue à une carte selon l'une quelconque des revendications précédentes, dans lequel il y a des pistes formées parallèlement à la direction de déplacement, lors de l'utilisation.

**Patentansprüche**

1. Kartenartiger Datenaufzeichnungsträger der Art, bei der mindestens eine ihrer Seiten eine nichtlineare Gestalt hat, **dadurch gekennzeichnet,** daß mindestens zwei Vorsprünge (100a, 100b) mit einer völlig gleichmäßigen gebogenen Gestalt, die sich in derselben Ebene wie eine Oberfläche des kartenartigen Datenaufzeichnungsträgers (1) erstrecken, an einer Seite oder an beiden Seiten davon entlang der Richtung, in der sich der kartenartige Datenaufzeichnungsträger bewegt, wenn er in Gebrauch ist, vorhanden sind.

2. Kartenartiger Datenaufzeichnungsträger (1) der Art, die einen Vorsprung hat, der sich in derselben Ebene wie eine Oberfläche des kartenartigen Datenaufzeichnungsträgers erstreckt, **dadurch gekennzeichnet,** daß an beiden Seiten davon entlang der Richtung, in der sich der kartenartige Datenaufzeichnungsträger (1) bewegt, wenn er in Gebrauch ist, mindestens zwei erwähnte Vorsprünge (100a, 100b, 100c, 100d) mit einer völlig gleichmäßigen gebogenen Gestalt vorhanden sind.

3. Kartenartiger Datenaufzeichnungsträger (1) der Art, die einen Vorsprung hat, der sich in derselben Ebene wie eine Oberfläche des kartenartigen Datenaufzeichnungsträgers erstreckt, **dadurch gekennzeichnet,** daß an mindestens einer Seite davon entlang einer Längsrichtung des Aufzeichnungsträgers (1) mindestens zwei Vorsprünge (100a, 100b) mit einer völlig gleichmäßigen gebogenen Gestalt vorhanden sind.

4. Kartenartiger Datenaufzeichnungsträger der Art, die einen Vorsprung hat, der sich in derselben Ebene wie eine Oberfläche des kartenartigen Datenaufzeichnungsträgers erstreckt, **dadurch gekennzeichnet,** daß an beiden Seiten davon entlang einer Längsrichtung des Aufzeichnungsträgers (1) mindestens zwei Vorsprünge (100a, 100b, 100c, 100d) mit einer völlig gleichmäßigen gebogenen Gestalt vorhanden sind.

5. Kartenartiger Datenaufzeichnungsträger nach einem der Ansprüche 1 bis 4, bei dem die Vorsprünge (100a, 100b, 100c, 100d) eine Vorsprungshöhe von 0,1 bis 1,0 mm haben.

6. Kartenartiger Datenaufzeichnungsträger nach einem der vorhergehenden Ansprüche, bei dem die Vorsprünge (100a, 100b, 100c, 100d) nahe den beiden Endbereichen einer Datenaufzeichnungsfläche (2) des kartenartigen Datenaufzeichnungsträgers (1) gebildet sind.

7. Kartenartiger Datenaufzeichnungsträger nach einem der vorhergehenden Ansprüche, bei dem die Vorsprünge (100a, 100b, 100c, 100d) symmetrisch um die Mitte des kartenartigen Datenaufzeichnungsträgers (1) herum gebildet sind.

8. Kartenartiger Datenaufzeichnungsträger nach einem der vorhergehenden Ansprüche, bei dem die Vorsprünge eine Anordnung mit einer völlig gleichmäßigen gebogenen Gestalt haben.

9. Kartenartiger Datenaufzeichnungsträger der Art, die mindestens zwei folienartige Bauteile hat, die durch einen Klebstoff geklebt sind, **dadurch gekennzeichnet,** daß in der Nähe von mindestens einer Seite des Aufzeichnungsträgers entlang einer Längsrichtung des Aufzeichnungsträgers ein nicht mit dem Klebstoff beschichteter Bereich (1e) vorgesehen ist.

10. Kartenartiger Datenaufzeichnungsträger der Art, die mindestens zwei folienartige Bauteile aufweist, die durch einen Klebstoff geklebt sind, um einen Verbindungsbereich zu bilden, **dadurch gekennzeichnet,** daß der Verbindungsbereich (1c) bezüglich eines am weitesten vorspringenden Bereiches einer Stirnfläche (1a, 1d) von mindestens einer Seite des Aufzeichnungsträgers entlang einer Längsrichtung des Aufzeichnungsträgers zurückgesetzt ist.

11. Kartenartiger Datenaufzeichnungsträger der Art, die mindestens zwei folienartige Bauteile aufweist, die durch einen Klebstoff geklebt sind, um einen Verbindungsbereich zu bilden, **dadurch gekennzeichnet,** daß mindestens der Verbindungsbereich (1c) bezüglich eines am weitesten vorspringenden Bereichs einer Stirnfläche (1a, 1d) von mindestens einer Seite davon entlang der Richtung, in der sich der kartenartige Datenaufzeichnungsträger bewegt, wenn er in Gebrauch ist, zurückgesetzt ist.

12. Kartenartiger Datenaufzeichnungsträger der Art, die mindestens zwei folienartige Bauteile hat, die durch einen Klebstoff geklebt sind, **dadurch gekennzeichnet,** daß ein nicht mit dem Klebstoff beschichteter Bereich (1e) nahe mindestens einer Seite und entlang einer Bewegungsrichtung des kartenartigen Datenaufzeichnungsträgers gebildet ist.

13. Kartenartiger Datenaufzeichnungsträger nach einem der vorhergehenden Ansprüche, der durch mindestens zwei folienartige Bauteile (1b, 1d) gebildet ist, die durch einen Klebstoff (1c) geklebt sind, um einen Verbindungsbereich zu bilden, wobei mindestens der Verbindungsbereich (1c) bezüglich eines am weitesten vorspringenden Bereichs einer Stirnfläche der erwähnten Seite innerhalb derselben Ebene wie die Oberfläche des kartenartigen Datenaufzeichnungsträgers (1) zurückgesetzt ist.

14. Kartenartiger Datenaufzeichnungsträger nach einem der Ansprüche g bis 13, bei dem nur der Verbindungsbereich (1c) zurückgesetzt ist.

15. Kartenartiger Datenaufzeichnungsträger nach einem der Ansprüche 9 bis 14, bei dem der zurückgesetzte Bereich des Verbindungsbereich (1c) eine Tiefe von 0,1 bis 1,0 mm hat.

16. Kartenartiger Datenaufzeichnungsträger nach einem der Ansprüche 9 bis 15, bei dem ein Bereich (1b, Fig. 12A) nahe dem Verbindungsbereich (1c) zurückgesetzt ist.

17. Kartenartiger Datenaufzeichnungsträger nach einem der Ansprüche 9 bis 16, bei dem der am weitesten vorspringende Bereich eine gleichmäßige gebogene Gestalt hat.

18. Kartenartiger Datenaufzeichnungsträger nach einem der Ansprüche 9 bis 16, bei dem der am weitesten vorspringende Bereich einen Teil eines Quadrats bzw. Vierecks bildet.

**19.** Kartenartiger Datenaufzeichnungsträger nach Anspruch 9 oder 10, bei dem der nicht mit dem Klebstoff beschichtete Bereich eine Breite hat, die im Bereich von 0,5 bis 1,0 mm liegt.

**20.** Kartenartiger Datenaufzeichnungsträger nach einem der vorhergehenden Ansprüche, der aus einer optischen Karte besteht.

**21.** Kartenartiger Datenaufzeichnungsträger nach einem der vorhergehenden Ansprüche, der offen zugeführt wird.

**22.** Kartenartiger Datenaufzeichnungsträger nach einem der vorhergehenden Ansprüche, der die Größe einer Kreditkarte hat.

**23.** Kartenartiger Datenaufzeichnungsträger nach einem der vorhergehenden Ansprüche, bei dem parallel zu der Bewegungsrichtung, wenn er in Gebrauch ist, Spuren gebildet werden.

*Fig. I A*

*Fig. I B*

*Fig. 6*

*Fig. 2A*

*Fig. 2B*

*Fig. 2C*

Fig. 3

EP 0 252 662 B1

*Fig. 4A*

*Fig. 4B*

Fig. 5A

Fig. 5B

Fig. 5C

## Fig. 7A

## Fig. 7 B

## Fig. 7C

## Fig. 7D

## Fig. 8A

## Fig. 8B

# Fig. 9

# Fig. 10 A

# Fig. 10 B

## Fig. 11A

## Fig. 11B

## Fig. 12A

## Fig. 12B

## Fig. 13 A

## Fig. 13 B